**Europäisches Patentamt**

**European Patent Office**

**Office européen des brevets**

(19)

(11) Veröffentlichungsnummer : **0 180 027**
**B1**

(12) **EUROPÄISCHE PATENTSCHRIFT**

(45) Veröffentlichungstag der Patentschrift :
30.11.88

(51) Int. Cl.⁴ : **A 01 D 41/12, F 16 H 39/50**

(21) Anmeldenummer : **85111832.3**

(22) Anmeldetag : **19.09.85**

(54) **Hilfsantriebsvorrichtung für den Rücklauf des Antriebes von Arbeitsorganen eines Mähdreschers.**

(30) Priorität : **28.09.84 US 656127**

(43) Veröffentlichungstag der Anmeldung :
**07.05.86 Patentblatt 86/19**

(45) Bekanntmachung des Hinweises auf die Patenterteilung : **30.11.88 Patentblatt 88/48**

(84) Benannte Vertragsstaaten :
**BE DE FR GB IT**

(56) Entgegenhaltungen :
EP-A- 0 065 304
DE-A- 2 315 772
DE-A- 2 325 119
GB-A- 1 500 836
US-A- 4 138 837
US-A- 4 467 590

(73) Patentinhaber : **DEERE & COMPANY**
**1 John Deere Road**
**Moline Illinois 61265 (US)**

(72) Erfinder : **Stroh, Clinton Byron**
**5142 - 26th Avenue A Ct.**
**Moline Illinois 61265 (US)**
Erfinder : **Yarbrough, Don Lewis**
**215 W. 13th Avenue**
**Coal Valley Illinois 61240 (US)**

(74) Vertreter : **Feldmann, Bernhard et al**
**DEERE & COMPANY European Office, Patent Depart-**
**ment Steubenstrasse 36-42 Postfach 503**
**D-6800 Mannheim 1 (DE)**

**Beschreibung**

Die Erfindung bezieht sich auf eine Hilfsantriebsvorrichtung für den Antrieb, insbesonders für den Rücklauf des Antriebes von Arbeitsorganen eines Mähdreschers, z. B. eines Elevatorförderers, unabhängig vom Hauptantrieb mit einem Hydraulikmotor, der ein drehbares Antriebselement aufweist, das über eine schaltbare Kupplung mit Getriebeelementen zum Antrieb der Arbeitsorgane des Mähdreschers wahlweise verbindbar ist.

Es ist bereits eine Hilfsantriebsvorrichtung für den Rücklauf der Erntebergungsvorrichtung eines Mähdreschers bekannt (US-A-4 467 590), die hierzu aus einem Hydraulikmotor und einem Stirnradgetriebe besteht, die an der Außenseite des Mähdreschers vorgesehen sind und die untere Welle des Elevatorförderers entgegengesetzt zur normalen Arbeitsrichtung antreiben, wenn innerhalb des Elevatorförderers Verstopfungen auftreten, so daß diese dadurch beseitigt werden können. Der Hydraulikmotor wird lediglich für den Rücklauf des Elevatorförderers eingesetzt und arbeitet somit unabhängig von dem Hauptantrieb der Erntebergungsvorrichtung. Zwischen dem Stirnradgetriebe und dem Ausgang des Hydromotors ist eine mechanische Schaltkupplung geschaltet, mittels der die Antriebsverbindung zwischen dem Hydromotor und dem Schrägförderer hergestellt werden kann. Die mechanische Kupplung wird über einen Stellhebel betätigt, der auch zur Betätigung der Kupplung für den Schrägförderer dient. Somit läßt sich der Hydromotor für den Hilfsantrieb nur schalten, wenn zuvor über den Stellhebel die Kupplung für den Hauptantrieb abgeschaltet ist.

Demgegenüber liegt der Erfindung die Aufgabe zugrunde, die Schaltvorrichtung sowie die Antriebsvorrichtung für den Rücklauf der einzelnen Arbeitsorgane bzw. des Schrägförderers derart auszubilden, daß unter Beibehaltung einer einwandfrei arbeitenden, leicht zu bedienenden Vorrichtung mit einem Minimum von Bauteilen ausgekommen werden kann. Diese Aufgabe ist dadurch gelöst worden, daß dem drehbaren Antriebselement eine hydraulisch betätigbare Kupplung zugeordnet ist, die bei einem solchen Druck ansprechbar ist, der etwas unter dem Ansprechdruck zum Antrieb des Hydraulikmotors liegt, daß der Hydraulikmotor sowie die hydraulisch betätigbare Kupplung mittels Hydraulikleitungen an eine Förderpumpe parallel angeschlossen sind, der ein normalerweise geschlossenes Schaltventil zugeordnet ist, das über einen elektrisch-hydraulischen Schaltkreis derart integriert und über Stellmittel betätigbar ist, daß die hydraulisch betätigbare Kupplung und der Hydraulikmotor gleichzeitig mit Druckmittel beaufschlagbar sind, wobei der Druckanstieg in der Kupplung den erforderlichen Schaltungsdruck zur Herstellung der Antriebsverbindung zwischen dem Hydraulikmotor und den Arbeitsorganen erreicht, bevor der Ansprechdruck zum Antrieb des Hydraulikmotors sich eingestellt hat. Hierdurch wird eine relativ einfach zu bedienende, kostengünstige Vorrichtung zum Rücklauf der einzelnen Arbeitsorgane, beispielsweise des Elevatorförderers, geschaffen, so daß bei eventuell auftretenden Störungen an den Arbeitsorganen mittels des elektrisch-hydraulischen Schaltkreises unverzüglich der Hauptantrieb abgeschaltet werden kann und ein unabhängiger Hilfsantrieb, beispielsweise der Hydromotor, eingeschaltet werden kann, der die Arbeitsorgane entgegengesetzt zur normalen Arbeitsrichtung antreibt, um beispielsweise die in den Arbeitsorganen bzw. dem Elevatorförderer auftretenden Verstopfungen abzubauen. Durch die Parallelschaltung von Hydraulikmotor und der hydraulisch betätigbaren Kupplung wird sichergestellt, daß diese bei Umstellung auf Rückwärtslauf sofort mit Druckmittel versorgt werden, so daß die Umschaltung von dem Hauptantrieb auf den Hilfsantrieb in kürzester Zeit durchgeführt werden kann. Dabei wird durch den verzögerten Druckanstieg im Hydraulikmotor und durch den geringen Ansprechdruck zur Betätigung der Kupplung sichergestellt, daß die Kupplung zuerst eingerückt wird, bevor der Hydraulikmotor zu arbeiten beginnt. Somit kann die elektrisch betätigbare Schaltkupplung vor Beschädigung geschützt und die Lebensdauer erhöht werden. Hierzu ist es vorteilhaft, daß der Hydraulikmotor die Antriebskomponenten des Mähdreschers, insbesondere die Arbeitskomponenten der Erntebergungsvorrichtung und des Schrägfördergehäuses eines Mähdreschers, entgegengesetzt zur normalen Arbeitsrichtung antreibt. Diese Antriebsvorrichtung bzw. die Hilfsantriebsvorrichtung eignet sich insbesondere zum Antrieb des Schrägförderers in umgekehrter Arbeitsrichtung, wenn Verstopfungen in der Erntebergungsvorrichtung, am Schneidwerk oder am Elevatorförderer auftreten. Durch den Rücklauf des Elevatorförderers lassen sich nach Abschaltung der Hauptantriebsvorrichtung die im Schrägfördergehäuse auftretenden Verstopfungen in kürzester Zeit beseitigen. Durch die vorteilhafte Ausbildung der elektrisch-hydraulischen Schaltvorrichtung wird auf einfache Weise ohne großen baulichen Aufwand eine Vorrichtung geschaffen, mit der Fehlschaltungen ausgeschlossen sind.

In weiterer Ausgestaltung der Erfindung ist es vorteilhaft, daß der elektrisch-hydraulische Schaltkreis einen Doppelkippschalter aufweist, der wahlweise bzw. wechselweise betätigbar ist und nur dann den Hydraulikmotor mit der Kraftquelle verbindet, wenn die Stromversorgung für den Antrieb des Elevatorförderers für Vorwärtsantrieb unterbrochen ist, und daß in der Antriebsverbindung zwischen der Kraftquelle und dem Elevatorforderer eine elektrisch schaltbare Kupplungseinrichtung vorgesehen ist, wobei die Antriebsverbindung über den Doppelkippschalter von der Energieversorgung getrennt werden kann, der ggf. die Energieversorgung für den Hydraulikmotor für Rücklauf herstellen kann. Die Verwendung eines Doppelkippschalters gestattet den wechselweisen Anschluß entweder des Hauptantriebes an die Kraftquelle oder des Hilfsantriebes an die Kraftquelle. Je nach Stellung des Doppelkippschalters wird entweder die Kupplung für den Hauptantrieb oder die Kupplung für den Hilfsantrieb betätigt und somit die gewünschte Antriebsverbindung in kürzester Zeit hergestellt. Die Verwendung des Doppelkippschalters verhindert somit auf einfache Weise Fehlschaltungen, so daß Beschädigungen an der Antriebsvorrichtung vermieden werden können.

In weiterer Ausgestaltung der Erfindung ist es vorteilhaft, daß die hydraulisch betätigbare Kupplungseinrichtung koaxial zueinander verlaufende Ein- und Ausgangsteile aufweist, die mit dem Ausgangsteil des Hydraulikmotors und dem Eingangsteil des Elevatorförderers verbunden sind, wobei der Eingangsteil der Kupplungseinrichtung koaxial zu dem Ausgangsteil des Hydraulikmotors verläuft, und daß in dem Antriebssystem des Elevatorförderers eine Drehmomentenbegrenzungseinrichtung vorgesehen ist. Vorteilhaft ist es ferner, daß die Drehmomentenbegrenzungseinrichtung als Rutschkupplung zwischen dem Zugmittelgetriebe und einer Welle zum Antrieb des Elevatorförderers ausgebildet ist. Da die Ein- und Ausgangsteile der hydraulisch betätigbaren Kupplungseinrichtung sowie der Ausgangsteil des Hydraulikmotors und der Eingangsteil des Elevatorförderers koaxial zueinander angeordnet sind, erhält man eine sehr kompakte Anordnung der gesamten Vorrichtung und einen kleinen Kraftflußweg zwischen den einzelnen Antriebsorganen. Dabei kann der Ausgangsteil des Hydraulikmotors als Drehflansch ausgebildet sein und der Eingangsteil des Elevatorförderers als Hinterwelle mit einem Antriebselement ausgerüstet sein. Durch die Verwendung der Drehmomentenbegrenzungseinrichtung, die als Rutschkupplung ausgebildet sein kann und zwischen dem Zugmittelgetriebe zum Antrieb der Hinterwelle des Elevatorförderers und einer weiteren oberen Welle des Elevatorförderers vorgesehen sein kann, erhält man die Gewährleistung, daß bei auftretender Überlast keine Beschädigung an den einzelnen Arbeitskomponenten bzw. Antriebsorganen auftritt.

In weiterer Ausgestaltung der Erfindung ist es vorteilhaft, daß die hydraulisch betätigbare Kupplung mittels einer Feder druckmittelbeaufschlagt ist, so daß die Antriebsverbindung zwischen dem Hydraulikmotor und dem Elevatorförderer normalerweise unterbrochen ist, wobei der Druckabfall des Druckmittels bis unterhalb des Ansprechdruckes zur Betätigung der Kupplung fällt und so den Ausrückvorgang der Kupplung ermöglicht, und daß die hydraulisch betätigbare Kupplung einen drehbaren Eingangsteil aufweist, der mit dem Hydraulikmotor sowie einem axial verstellbaren Kolben antriebsverbunden ist, der koaxial zu dem Eingangsteil angeordnet ist. Vorteilhaft ist es ferner, die Hilfsantriebsvorrichtung nach der Erfindung in eine bekannte Erntebergungsvorrichtung eines Mähdreschers einzusetzen, die ein Schrägfördergehäuse mit einer Schneidwerksplattform umfaßt und bei der zur Antriebsvorrichtung eine im Bereich der Einlaßöffnung des Schrägfördergehäuses vorgesehene Hinterwelle gehört, die über ein Zugmittelgetriebe mit dem Hydraulikmotor antriebsverbunden ist, der am Schrägfördergehäuse angeordnet ist, und daß der Hydraulikmotor unterhalb des Schrägfördergehäuses im Bereich der Einlaßöffnung vorgesehen ist, wobei das Zugmittelgetriebe des Hydraulikmotors der Hilfsantriebsvorrichtung direkt mit dem Eingang der Hinterwelle zum Antrieb des Schrägförderers verbunden ist. Durch Verwendung einer Feder, die die hydraulisch betätigbare Kupplung normalerweise in ihrer entkuppelten Stellung hält, wird sichergestellt, daß der Hilfsantrieb so lange ausgeschaltet bleibt, solange der Hauptantrieb eingeschaltet ist. Dabei wird der Druckmittelfluß zu der Kupplung und dem Hydraulikmotor so gesteuert, daß eine zeitlich versetzte Beaufschlagung der hydraulischen Teile gewährleistet wird, so daß stets die Kupplung erst eingerückt wird, bevor der Hydraulikmotor zum Antrieb des Elevatorförderers eingesetzt wird. Hierdurch erhält man mit einfachen baulichen Mitteln eine leicht zu bedienende Vorrichtung zur Einschaltung des Hydraulikmotors für den Rücklauf des Elevatorförderers, wenn Verstopfungen im Schrägfördergehäuse auftreten. Durch die vorteilhafte Ausbildung des elektrisch-hydraulischen Schaltkreises werden Fehlschaltungen ausgeschlossen und stets nur ein Antriebsaggregat mit Energie versorgt, so daß das eine Antriebsaggregat dem anderen Antriebsaggregat nicht entgegenwirkt.

Im folgenden wird die Erfindung anhand von Ausführungsbeispiele darstellenden Zeichnungen näher erläutert. Es zeigt :

Fig. 1 eine schematische Darstellung eines Mähdreschers mit den verschiedenen Antriebselementen,

Fig. 2 eine Draufsicht der Erntebergungsvorrichtung mit der zugehörigen Antriebsvorrichtung sowie der Reversierungsvorrichtung zum Rücklauf des Schrägförderantriebes,

Fig. 3 eine Seitenansicht des Schrägfördergehäuses mit der Reversierungsvorrichtung,

Fig. 4 eine Teilansicht eines Hydraulikmotors mit der zugehörigen Kupplung zur Antriebsverbindung zwischen Hydraulikmotor und der Welle zum Rücklauf der Antriebsvorrichtung der Erntebergungsvorrichtung im Schnitt entlang der Linie 4-4 gemäß Fig. 3,

Fig. 5 die linke Seitenansicht der Antriebsvorrichtung eines weiteren Ausführungsbeispiels,

Fig. 6 eine Teilansicht entlang der Linie 6-6 gemäß Fig. 5,

Fig. 7 eine schematische Darstellung des Hydraulikkreislaufes der Antriebsvorrichtung,

Fig. 8 eine Teilansicht der Bedienungselemente für die Antriebsvorrichtung der Erntebergungsvorrichtung.

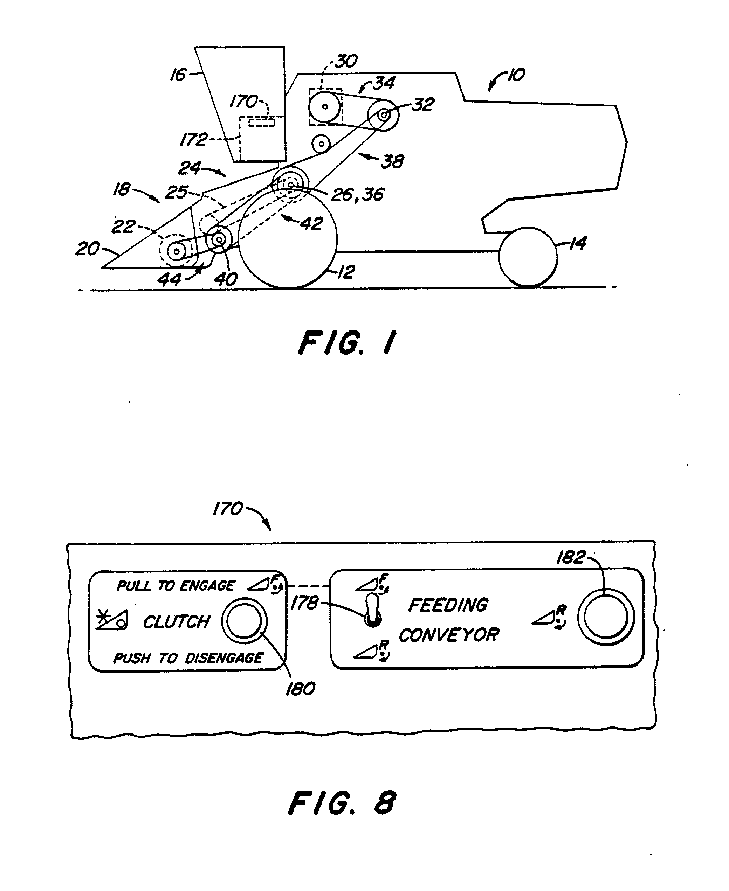

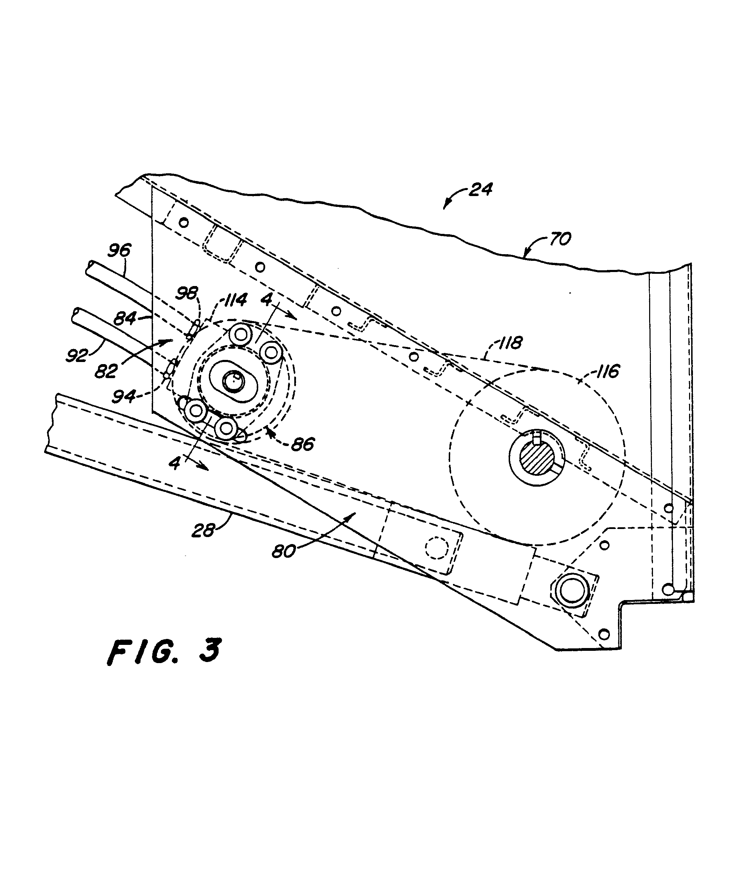

In der Zeichnung (Fig. 1) ist mit 10 ein Mähdrescher bezeichnet, der mit zwei vorderen Laufrädern 12 und zwei hinteren steuerbaren Laufrädern 14 ausgerüstet ist, die über in der Fahrerkabine 16 vorgesehene Bedienungselemente gesteuert werden können. Der Mähdrescher 10 ist mit einer Erntebergungsvorrichtung 18 ausgerüstet, die aus einer Schneidwerksplattform 20 und einer Einzugsschnecke 22 besteht, die das von der Schneidwerksplattform aufgenommene Erntegut zusammenzieht und es einem sich an die Schneidwerksplattform anschließenden Schrägfördergehäuse 24 aufgibt, in dem ein Elevatorförderer 25 angeordnet ist. Über den Elevatorförderer 25 gelangt das Erntegut zu einer in der Zeichnung nicht dargestellten Dresch- und Trennvorrichtung. Der Elevatorförderer ist mittels einer quer verlaufenden Achse 26 an das vordere Ende des Mähdreschers 10 vertikal schwenkbar angeschlossen. Die Verstellung des Elevatorförderers erfolgt über Hydraulikzylinder 28 (siehe Fig. 3). Die Hauptantriebsquelle des Mähdreschers 10 bildet eine Brennkraftmaschine 30, die über ein Zugmittelgetriebe 34 mit einer Antriebswelle 32 eines weiteren Zugmittelgetriebes 38 antriebsverbunden ist. Das Zugmittelgetriebe 38 steht über eine Zugmittelscheibe mit einer am oberen Ende des Schrägfördergehäuses vorgesehenen Antriebsvorrichtung 36 in Antriebsverbindung, die koaxial zur Achse 26 des Schrägfördergehäuses 24 verläuft. Vom Zugmittelgetriebe 38 wird der Antrieb auf ein Zugmittelgetriebe 42 und eine am unteren Ende des Schrägfördergehäuses 24 vorgesehene Hinterwelle 40 geleitet. Die Hinterwelle 40 treibt über ein Zugmittelgetriebe 44 die Einzugsschnecke 22 an (siehe Fig. 1).

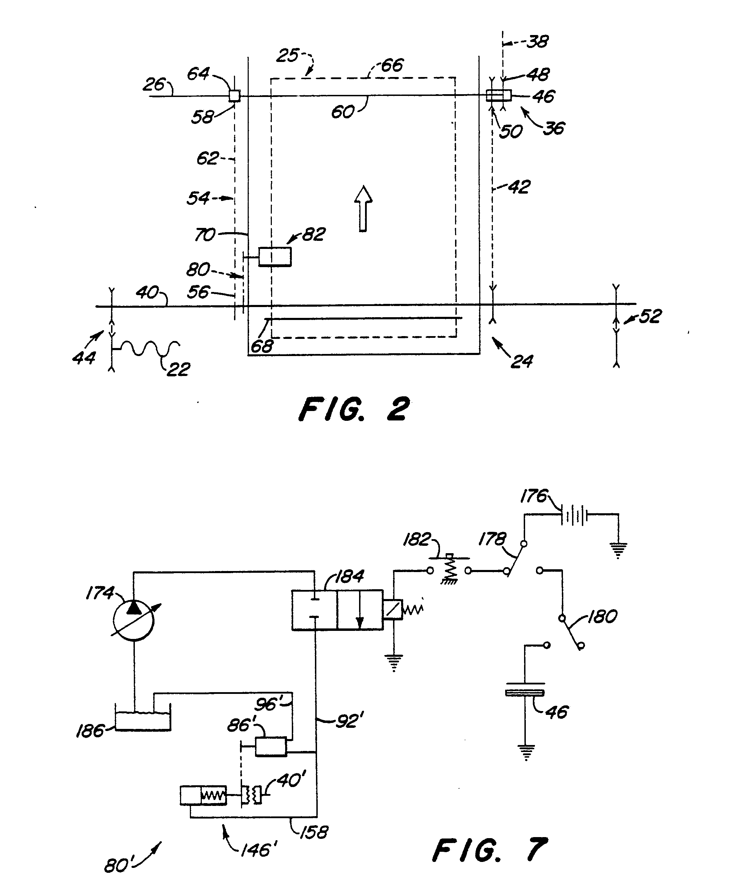

In Fig. 2 sind die einzelnen Antriebselemente im Detail schematisch wiedergegeben. Die Antriebsvorrichtung 36 weist eine elektrische Kupplung 46 auf, die zwischen einer von dem Zugmittelge-triebe 38 angetriebenen Zugmittelscheibe 48 und einer Zugmittelscheibe 50 des Zugmittelgetriebes 42 wirkt. Von der Hinterwelle 40 wird der Antrieb zu den verschiedenen Antriebskomponenten der Erntebergungsvorrichtung 18 eines Mähdreschers geleitet. Die Hinterwelle 40 dient somit als Eingangswelle für die verschiedenen Antriebselemente einschließlich der im Schrägfördergehäuse 24 vorgesehenen Förderelemente. Wie aus Fig. 2 hervorgeht, treibt die Hinterwelle 40 über das Zugmittelgetriebe 44, wie bereits erwähnt, die Einzugsschnecke 22 an. Ferner wird über die Hinterwelle 40 mittels eines weiteren Zugmittelge-triebes 52 eine in der Zeichnung nicht dargestellte Mähwerksvorrichtung angetrieben. Auf der Hinterwelle 40 befindet sich ferner ein Kettenrad 56, das über ein Zugmittel 54 mit einem Kettenrad 58 antriebsverbunden ist, das auf einer am oberen Ende des Schrägfördergehäuses 24 vorgesehenen Welle 60 fest angeordnet ist. Das Zugmittel 54 kann beispielsweise als Rollenkette 62 ausgebildet sein. Der Eingang für den Elevatorförderer 25 weist eine Drehmomentenkupplung bzw. eine Rutschkupplung 64 auf, die zwischen dem Kettenrad 58 und der Welle 60 wirkt und bei einer Überbeanspruchung des Elevatorförderers 25 ausschaltet. In Fig. 2 ist der Elevatorförderer 25 als endloses, Förderleisten aufweisendes Förderband ausgebildet, das um in der Zeichnung nicht dargestellte Kettenräder geführt ist, die auf der Welle 60 und einer unteren Welle 68 angetrieben sind. Der Elevatorförderer 25 ist von den Wänden 70 des Schrägfördergehäuses 24 umgeben. Das Schrägfördergehäuse 24 weist einen rechteckförmigen Querschnitt auf.

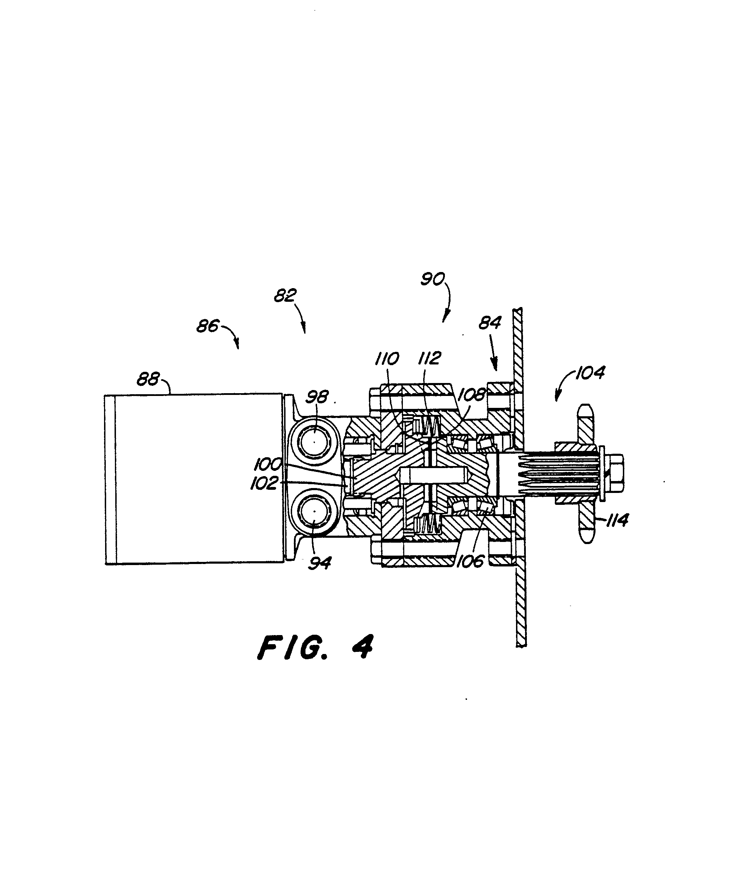

Wie aus Fig. 2 ferner hervorgeht, weist der Elevatorförderer ferner eine Hilfsantriebsvorrichtung 80 für den Rücklauf auf, die in den Figuren 3 und 4 näher veranschaulicht ist. Zu der Hilfsan-triebsvorrichtung 80 gehört eine Antriebsvorrich-tung 82, die mittels einer Halterung 84 an der rechten Außenwand im unteren Bereich des Schrägfördergehäuses 24 angeordnet ist. Die Antriebsvorrichtung 82 weist einen Hydraulikmotor 86 auf, dessen Gehäuse 88 koaxial zu einer Verlängerung 90 verläuft (siehe Fig. 4). Das Gehäuse 88 des Hydraulikmotors 86 ist mit einer Einlaßöffnung 94 ausgerüstet, an die eine Hydraulikleitung 92 anschließbar ist, um den Hydraulikmotor mit Druckmittel zu versorgen. Eine Abflußleitung 96 ist an eine Auslaßöffnung 98 angeschlossen. Wie aus Fig. 4 hervorgeht, weist der Hydraulikmotor 86 einen Ausgangsteil 100 auf, der in einem bestimmten Bereich axial verstellbar ist und mit einer Druckmittelkammer 102 in Verbindung steht, die über die Einlaßöffnung 94 mit Druckmittel versorgt wird, so daß bei Druckmittelbeaufschlagung der Ausgangsteil 100 als Kolben wirkt. Mit dem Kolben, der beispielsweise als Drehkolben ausgebildet sein kann, ist ein Drehteil bzw. Antriebselement 104 wirkungsmäßig verbunden, das in der Gehäuseverlängerung 90 mittels Lager 106 drehbar aufgenommen ist. Das innere Ende des Antriebselementes 104 weist stirnseitig eine Kupplungsfläche 108 auf, die mit einer ge-genüberliegenden Kupplungsfläche 100 zusam-menwirkt, die am stirnseitigen Ende des Ausgangsteiles bzw. Kolbens 100 vorgesehen ist. Fließt zu dem Ausgangsteil bzw. dem Kolben 100 kein Druckmittel, so werden die beiden Kupplungsflächen 108 und 110 mittels Tellerfedern 112 voneinander getrennt, so daß sie nicht miteinander wirkungsmäßig verbunden sind. Am stirnseitigen Ende des Antriebselementes 104 befindet sich ein Kettenrad 114, das über eine Kette 118 mit einem auf der Hinterwelle 40 angeordneten Kettenrad 116 antriebsverbunden ist (siehe Fig. 3).

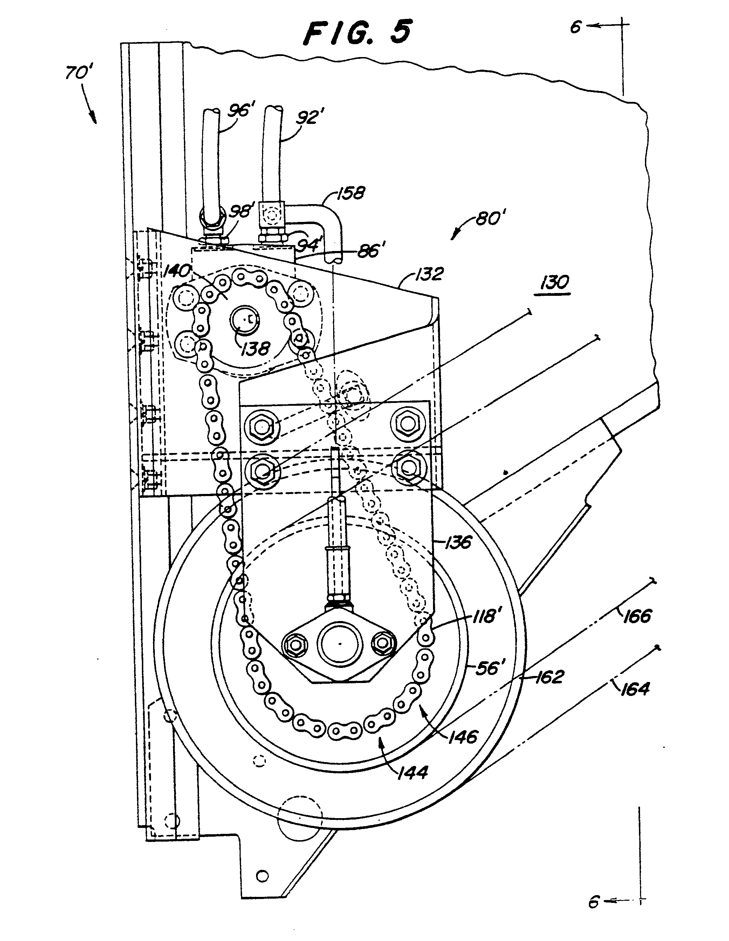

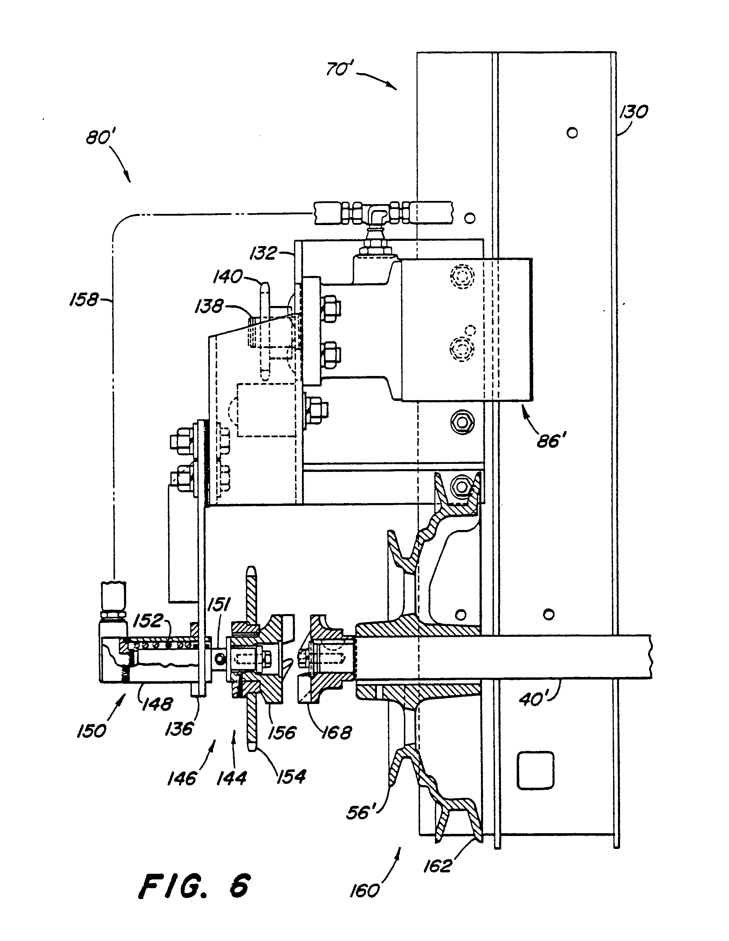

Ein weiteres Ausführungsbeispiel der Hilfsantriebsvorrichtung 80' ist in den Figuren 5 und 6 veranschaulicht und nachfolgend beschrieben. Die Hilfsantriebsvorrichtung 80' ist an der linken Seitenwand 130 des Gehäuseteils 70' des Schrägfördergehäuses 24 im vorderen, unteren Bereich angeordnet. Zur Aufnahme des Hydraulikmotors 86' dient eine Halterung 132, die über Schraubenbolzen mit dem Gehäuseteil 70' lösbar verbunden ist. Mit der Halterung 132 ist ferner eine sich nach unten erstreckende Kupplungshalterung 136 verbunden. Die Ausgangswelle 138 des Hydraulikmotors 86' weist ein Kettenrad 140 auf, das über eine Kette 118' mit einer ein Kettenrad 154 aufweisenden Antriebsvorrichtung 144 antriebsverbunden ist. Der Antriebsvorrichtung 144 ist eine Kupplungseinrichtung 146 zugeordnet, die von der Halterung 136 aufgenommen ist. Die Kupplungseinrichtung 146 weist ein Kupplungsgehäuse 148 auf, in dem ein axial verstellbarer Kolben 150 aufgenommen ist, an dessen sich über die Halterung 136 hinaus erstreckenden Ende 151 das Kettenrad 154 angeordnet ist. Auf dem Kolben 150 ist eine Druckfeder 152 angeordnet, die zwischen der Innenseite der Halterung 136 und einem Ringflansch innerhalb des Kupplungsgehäuses wirkt und den Kolben 150 mit Bezug auf die Zeichnung gemäß Fig. 6 nach links, d. h. in das Gehäuse hinein, verschiebt. Das am Ende des Kolbens vorgesehene Kettenrad 154 ist mittels einer formschlüssigen Kupplung 156, die als Klauenkupplung ausgebildet sein kann, auf dem Ende 151 des Kolbens 150 drehfest angeordnet. Die Kupplung 156 verläuft koaxial zum Kettenrad 154 und zu dem Kolben 150. Der Hydraulikmotor 86' wird mittels einer Hydraulikleitung 92' versorgt, wobei das Druckmittel über die Abflußleitung 96' abfließen kann. Hierzu weist der Hydraulikmotor 86' eine Einlaßöffnung 94' und eine Auslaßöffnung 98' auf. Zur Druckmittelbeaufschlagung des Kolbens 150 ist an das Kupplungsgehäuse 148 eine Hydraulikleitung 158 angeschlossen, die mit der Einlaßöffnung 94' des Hydraulikmotors 86' verbunden ist. Auf diese Weise sind das Kupplungsgehäuse 148 und der Hydraulikmotor 86' parallel geschaltet.

Nach diesem Ausführungsbeispiel weist die Hintervelle 40', die koaxial zum Kolben 150 angeordnet ist, eine Doppelriemenscheibe 160 auf. Die Doppelriemenscheibe weist eine Scheibenhälfte 162 sowie eine Scheibenhälfte 56' auf. Die Scheibenhälfte 162 ist über einen Keilriemen 164 mit den auf der Welle 60 antreibbaren Mitteln verbunden, während die Scheibenhälfte 56' über einen Keilriemen 166 mit dem Elevatorförderer 25 antriebsverbunden ist. Die übrigen Antriebsorgane bzw. Arbeitswerkzeuge, beispielsweise die Einzugsschnecke 22, werden ebenfalls über die Hinterwelle 40' angetrieben. Die Hilfsantriebsvorrichtung 80' ist so angeordnet, daß die Kupplung 156 koaxial zur Hinterwelle 40' verläuft, so daß die Kupplung 156 mit der an der Hintervelle 40' befestigten Kupplung 168 in Eingriff bringbar ist.

Die Bedienungsperson steuert die einzelnen Antriebselemente mittels einer hydraulischen Steuervorrichtung, die in Fig. 7 schematisch dargestellt ist. Hierzu gehört ein Bedienungspaneel 170, das auf einer in der Fahrerkabine 16 vorgesehenen Konsole 172 angeordnet ist. Das Paneel 170 ist in Fig. 8 detailliert wiedergegeben. Das Bedienungspaneel 170 gemäß Fig. 8 ist für beide Ausführungsbeispiele geeignet.

Wie aus Fig. 7 hervorgeht, ist nachfolgend lediglich die Funktion für die Hilfsantriebsvorrichtung 80' beschrieben.

Beim normalen Arbeitseinsatz läuft die Antriebsvorrichtung vorwärts, d. h. die Brennkraftmaschine 30 treibt die einzelnen Antriebselemente gemäß Fig. 1 und 2 lediglich mechanisch an. Wird jedoch die hydraulische Hilfsantriebsvorrichtung 80' verwendet, mittels der die Erntebergungsvorrichtung des Mähdreschers entgegengesetzt zur normalen Arbeitsrichtung angetrieben wird, so wird hierzu eine Förderpumpe 174 eingeschaltet, die hierzu über entsprechende Antriebselemente mit der Brennkraftmaschine 30 antriebsverbunden ist. Das Basis-Antriebselement für den Normalantrieb zwischen Vorwärts- und Rückwärtsfahrt ist die elektrische Kupplung 46 (sie ist Teil der Antriebsvorrichtung 36), die über eine elektrische Kraftquelle 176 entsprechend mit Strom versorgt werden kann (siehe Fig. 7).

Um zwischen Vorwärts- und Rückwärtslauf zu schalten, wird ein Doppelkippschalter 178 betätigt, der auf dem Bedienungspaneel 170 angeordnet ist. Um die Antriebsvorrichtung für vorwärts bzw. rückwärts grundsätzlich antreiben zu können, ist ein weiterer Schaltvorgang notwendig. Hierzu ist auf dem Bedienungspaneel 170 ein Ein- und Ausschalter 180 vorgesehen, der dafür sorgt, daß die elektrische Kupplung 46 mit Strom versorgt wird und somit die Brennkraftmaschine 30 die Erntebergungsvorrichtung 18 antreiben kann. Für den Rücklauf bzw. den Einsatz der Hilfsantriebsvorrichtung 80' ist ein Druckschalter 182 vorgesehen, der normalerweise in seiner Offenstellung steht und geschlossen werden muß, um ein Schaltventil 184 von einer Schließstellung auf eine Durchflußstellung einstellen zu können. Hierdurch werden der Hydraulikmotor 86' und gleichzeitig die Kupplungseinrichtung 146' über die Pumpe 174 sowie die Hydraulikleitungen 92' und 158 mit Druckmittel versorgt. Das abfließende Druckmittel aus dem Hydraulikmotor 86' fließt über die Abflußleitung 96' zu einem Sammelbehälter 186. Die Ausbildung des Doppelkippschalters 178 macht es unmöglich, die Energieversorgung gleichzeitig für Vorwärts- und Rückwärtslauf der Erntebergungsvorrichtung des Mähdreschers so zu gewährleisten, daß eine Beschädigung der Antriebselemente ausgeschlossen ist. Hierzu dienen insbesondere der Ein- und Ausschalter 180 sowie der Druckschalter 182, die zur Vervollständigung des elektrischen Stromkreises von der Bedienungsperson einige Schaltvorgänge abverlangen, so daß eine Fehlschaltung der elektrischen Schaltvorrichtung auf vorteilhafte Weise ausgeschaltet werden kann. Somit erhält man mittels der elektrischen Schalter eine einfach zu bedienende Schaltvorrichtung. Bei normalen Arbeitseinsatz, d. h. bei Vorwärtsfahrt und Vorwärtslauf der einzelnen Antriebselemente des Mähdreschers 10, wird lediglich der Doppelkippschalter 178, der sich in einer Schließstellung befindet, in seine Aus-Stellung verstellt, wobei die Betriebsstellung der Antriebsvorrichtung aufrechterhalten wird, da die elektrische Kupplung 46 eingerückt bleibt. Im Notfall kann jedoch der Ein- und Ausschalter 180 sehr schnell wieder betätigt werden, um die Kupplung 46 nicht mehr mit Strom zu versorgen und diese dann auszuschalten. In diesem Fall ist dann die Hilfsantriebsvorrichtung 80' einzuschalten, um die Erntebergungsvorrichtung auf Rückwärtslauf umzuschalten und somit die Verstopfungen an der Einzugsschnecke 22 bzw. an dem Elevatorförderer 25 abzubauen. Hierzu wird der Doppelkippschalter 178 umgelegt, so daß die Stromversorgung sichergestellt ist, und danach der Druckschalter 182 so lange betätigt, bis die Verstopfungen beseitigt sind. In beiden Fällen können z. B. durch Verstopfungen bedingte Überlastungen der einzelnen Antriebselemente durch die Rutschkupplung 64 an der oberen Welle 60 im Schrägfördergehäuse 24 ausgeschaltet werden. Die Hilfsantriebsvorrichtung 80' weist ferner ein in der Zeichnung nicht dargestelltes Überdruckventil auf, das einen übermäßigen Druckanstieg im Hydrauliksystem ausschließt.

Bei beiden Ausführungsbeispielen wird die Reversierung der einzelnen Antriebselemente mittels eines linear arbeitenden Hydraulikmotors bewerkstelligt. In beiden Ausführungsbeispielen sind auch der Hydraulikmotor 86 bzw. 86' sowie das Kupplungsgehäuse 148 mit dem zugehörigen Kolben parallel geschaltet. In beiden Fällen wird der Kolben 150 zur Axialverstellung derart mit Druckmittel beaufschlagt, daß die Kupplungshälften 156 und 168 in Eingriff gebracht werden können, bevor der Hydraulikmotor 86 bzw. 86' die Hinterwelle 40 bzw. 40' antreibt. In beiden Fällen reicht der Druck aus, um die Federkräfte der Druckfeder 152 zu überwinden, die normalerweise dafür sorgt, daß die Kupplung in einer Offenstellung gehalten wird. Nach Loslassen des Druckschalters 182 wird das Schaltventil 184 in eine Schließstellung gebracht, so daß das Druckmittel aus der Pumpe 174 wieder zu dem Sammelbehälter 186 zurückfließt (siehe Fig. 7). Hierdurch entsteht auch ein entsprechender Druckabfall in den Hydraulikleitungen und in der Kupplungseinrichtung 146 bzw. 146', so daß die Torsionskräfte zwischen den beiden Kupplungen 156, 168 ebenfalls rapid sinken, so daß dann die Kupplungshälfte 156 mittels der Feder 152 in ihre unwirksame Stellung gebracht werden kann. D. h. durch Betätigung des Druckschalters 182 wird auch die Hilfsantriebsvorrichtung 80 automatisch abgeschaltet. Das Abschalten der Hilfsantriebsvorrichtung 80 erfordert nicht eine zusätzliche Wartezeit, wobei das System gegenüber Torsionskräften an den Kupplungselementen relativ unsensibel ist, so daß Restflüssigkeiten im Hydrauliksystem keinen Einfluß ausüben. Die Bedienung der Kupplung erfolgt in einer vorbestimmten zeitlichen Versetzung zur Bewegung des Hydromotors, wobei der Normalbetrieb bzw. die Vorwärtsfahrt nach Abschalten der Hilfsantriebsvorrichtung sofort wieder möglich ist.

Die Hilfsantriebsvorrichtung kann allgemein für die einzelnen Arbeitsorgane, die am Mähdrescher vorgesehen sind, vorgesehen werden, um bei auftretenden Hindernissen, beispielsweise bei Verstopfungen, den Erntegutstau abzubauen. Hierzu kann der Hydraulikmotor ein drehbares Antriebselement aufweisen, das über eine elektrisch schaltbare Kupplung mit den Getriebeelementen zum Antrieb der Arbeitsorgane des Mähdreschers verbunden ist. Ferner ist das drehbare Antriebselement 104 einer hydraulisch betätigbaren Kupplung zugeordnet. Das Antriebselement 104 besteht aus einem Wellenteil mit einem Kupplungselement, das stirnseitig eine Kupplungsfläche 108 aufweist, die mit einer gegenüberliegenden Kupplungsfläche 110 zusammenwirkt, die am Ausgangsteil des Hydromotors an den Kolben 100 vorgesehen ist, der durch Flüssigkeit unter Druck parallel zum Eingangsteil bzw. zur Druckmittelkammer des Hydraulikmotors betätigt wird. Hierdurch erhält man mit einfachen baulichen Mitteln eine sehr kompakte Hilfsantriebsvorrichtung.

**Patentansprüche**

1. Hilfsantriebsvorrichtung für den Antrieb, insbesonders für den Rücklauf des Antriebes von Arbeitsorganen eines Mähdreschers (10), z. B. eines Elevatorsförderers (25), unabhängig vom Hauptantrieb mit einem Hydraulikmotor (86, 86'), der ein drehbares Antriebselement (104) aufweist, das über eine schaltbare Kupplung mit Getriebeelementen zum Antrieb der Arbeitsorgane des Mähdreschers wahlweise verbindbar ist, dadurch gekennzeichnet, daß dem drehbaren Antriebselement (104) eine hydraulisch betätigbare Kupplung zugeordnet ist, die bei einem solchen Druck ansprechbar ist, der etwas unter dem Ansprechdruck zum Antrieb des Hydraulikmotors (86, 86') liegt, daß der Hydraulikmotor (86, 86') sowie die hydraulisch betätigbare Kupplung mittels Hydraulikleitungen (92, 92') an eine Förderpumpe (174) parallel angeschlossen sind, der ein normalerweise geschlossenes Schaltventil (184) zugeordnet ist, das über einen elektrisch-hydraulischen Schaltkreis (46, 176-182) derart integriert und über Stellmittel betätigbar ist, daß die hydraulisch betätigbare Kupplung und der Hydraulikmotor (86) gleichzeitig mit Druckmittel beaufschlagbar sind, wobei der Druckanstieg in der Kupplung den erforderlichen Schaltungsdruck zur Herstellung der Antriebsverbindung zwischen dem Hydraulikmotor (86, 86') und den Arbeitsorganen erreicht, bevor der Ansprechdruck zum Antrieb des Hydraulikmotors sich eingestellt hat.

2. Vorrichtung nach Anspruch 1, dadurch gekennzeichnet, daß der Hydraulikmotor (86, 86') die Antriebskomponenten des Mähdreschers (10), insbesondere die Arbeitskomponenten der Erntebergungsvorrichtung (18) und des Schrägfördergehäuses (24) eines Mähdreschers, entgegengesetzt zur normalen Arbeitsrichtung antreibt.

3. Vorrichtung nach Anspruch 1 oder 2, dadurch gekennzeichnet, daß der elektrisch-hydraulische Schaltkreis (46, 176-182) einen Doppelkippschalter (178) aufweist, der wahlweise bzw. wechselweise betätigbar ist und nur dann den Hydraulikmotor (86, 86') mit der Kraftquelle (176) verbindet, wenn die Stromversorgung für den Antrieb des Elevatorförderers (25) für Vorwärtsantrieb unterbrochen ist.

4. Vorrichtung nach einem oder mehreren der vorherigen Ansprüche, dadurch gekennzeichnet, daß in der Antriebsverbindung zwischen der Kraftquelle (176) und dem Elevatorförderer (25) eine elektrisch schaltbare Kupplungseinrichtung (108, 110, 146, 146') vorgesehen ist, wobei die Antriebsverbindung über den Doppelkippschalter (178) von der Energieversorgung getrennt werden kann, der ggf. die Energieversorgung für den Hydraulikmotor (86, 86') für Rücklauf herstellen kann.

5. Vorrichtung nach einem oder mehreren der vorherigen Ansprüche, dadurch gekennzeichnet, daß die hydraulisch betätigbare Kupplungseinrichtung (108, 110) koaxial zueinander verlaufende Ein- und Ausgangsteile aufweist, die mit dem Ausgangsteil (100) des Hydraulikmotors (86) und dem Eingangsteil (Antriebselement 104) des Elevatorförderers verbunden sind, wobei der Eingangsteil der Kupplungseinrichtung (108, 110) koaxial zu dem Ausgangsteil (100) des Hydraulikmotors (86) verläuft.

6. Vorrichtung nach einem oder mehreren der vorherigen Ansprüche, dadurch gekennzeichnet, daß in dem Antriebssystem des Elevatorförderers (25) eine Drehmomentenbegrenzungseinrichtung vorgesehen ist.

7. Vorrichtung nach Anspruch 6, dadurch gekennzeichnet, daß die Drehmomentenbegrenzungseinrichtung als Rutschkupplung (64) zwischen dem Zugmittelgetriebe (54) und einer Welle (60) zum Antrieb des Elevatorförderers (25) ausgebildet ist.

8. Vorrichtung nach einem oder mehreren der vorherigen Ansprüche, dadurch gekennzeichnet, daß die hydraulisch betätigbare Kupplung (108, 110 oder 156, 168) mittels einer Feder (112, 152) durckmittelbeaufschlagt ist, so daß die Antriebsverbindung zwischen dem Hydraulikmotor (86) und dem Elevatorförderer normalerweise unterbrochen ist, wobei der Druckabfall des Druckmittels bis unterhalb des Ansprechdruckes zur Betätigung der Kupplung fällt und so den Ausrückvorgang der Kupplung ermöglicht.

9. Vorrichtung nach einem oder mehreren der vorherigen Ansprüche, dadurch gekennzeichnet, daß die hydraulisch betätigbare Kupplung (156, 168) einen drehbaren Eingangsteil (Ende 151) aufweist, der mit dem Hydraulikmotor (86') sowie einem axial verstellbaren Kolben (150) antriebsverbunden ist, der koaxial zu dem Eingangsteil (Ende 151) angeordnet ist.

10. Vorrichtung nach einem oder mehreren der vorherigen Ansprüche, dadurch gekennzeichnet, daß der Mähdrescher ein Schrägfördergehäuse (24) mit einer Schneidwerksplattform (20) umfaßt und zur Antriebsvorrichtung eine im Bereich der Einlaßöffnung des Schrägfördergehäuses vorgesehene Hinterwelle (40) gehört, die über ein Zugmittelgetriebe (Hilfsantriebsvorrichtung 80) mit dem Hydraulikmotor (86) antriebsverbunden ist, der am Schrägfördergehäuse (24) angeordnet ist.

11. Vorrichtung nach einem oder mehreren der vorherigen Ansprüche, dadurch gekennzeichnet, daß der Hydraulikmotor unterhalb des Schrägfördergehäuses (24) im Bereich der Einlaßöffnung vorgesehen ist, wobei das Zugmittelgetriebe des Hydraulikmotors (86) der Hilfsantriebsvorrichtung (80) direkt mit dem Eingang der Hinterwelle (40) zum Antrieb des Schrägförderers verbunden ist.

**Claims**

1. Auxiliary drive device for the drive, especially for the reversal of the drive of working means of a combine harvester (10), e. g. an elevator conveyer (25), independently of the main drive, with a hydraulic motor (86, 86') which has a rotatable drive element (104) which is selectively capable of being coupled by way of a switchable coupling to gear elements for the drive of the working means of the the combine harvester, characterized in that there is associated with the rotatable drive element (104) a hydraulically operable coupling which is responsive to a pressure such as lies somewhat under the response pressure for the drive of the hydraulic motor (86, 86'), in that the hydraulic motor (86, 86') as well as the hydraulically operable coupling are connected in parallel to a supply pump (174) by means of hydraulic lines (92, 92'), there being associated with the pump a normally closed pilot valve (184), which is so integrated in an electro-hydraulic circuit (46, 176-182) and operable by setting means, that the hydraulically operable coupling and the hydraulic motor (86) are simultaneously subjected to pressure medium, the pressure rise in the coupling attaining the necessary switching pressure to establish the drive connection between the hydraulic motor (86, 86') and the working means, before the response pressure for the drive of the hydraulic motor has been reached.

2. Device according to claim 1, characterized in that the hydraulic motor (86, 86') drives the drive components of the combine harvester (10), especially the working components of the harvesting device (18) and the inclined feed housing (24) of the combine harvester, opposite to the normal drive direction.

3. Device according to claim 1 or 2, characterized in that the electro-hydraulic circuit (46, 176-182) comprises a two-way switch (178) which is selectively or alternately operable and only then connects the hydraulic motor (86, 86') to the power source (176) when the current supply for the drive of the elevator conveyer (25) in the forward direction is interrupted.

4. Device according to one or more of the preceding claims, characterized in that there is provided in the drive connection between the power source (176) and the elevator conveyer (25) and electrically switchable coupling device (108, 110, 146, 146'), whereby the drive connection can be isolated from the energy supply by the two-way switch (178), which supply can, if desired, produce the energy supply for the hydraulic motor (86, 86') for the reverse running.

5. Device according to one or more of the preceding claims, characterized in that the hydraulically operable coupling device (108, 110) has input and output parts running coaxially to one another, which are connected to the output part (100) of the hydraulic motor (86) and the input part (drive element 104) of the elevator conveyer (25), the input part of the coupling device (108, 110) running coaxially to the output part (100) of the hydraulic motor (86).

6. Device according to one or more of the preceding claims, characterized in that a torque-limiting device is provided in the drive system of the elevator conveyer (25).

7. Device according to claim 6, characterized in that the torque-limiting device is formed as a slipping clutch (64) between the belt drive (54) and a shaft (60) for the drive of the elevator conveyer (25).

8. Device according to one or more of the preceding claims, characterized in that the hydraulically operable coupling (108, 110 or 156, 168) is pressurized through a spring (112, 152), so that the drive connection between the hydraulic motor (86) and the elevator conveyer is normally interrupted, wherein the pressure drop of the pressure medium falls below the response pressure for the operation of the coupling and thus makes possible the release operation of the coupling.

9. Device according to one or more of the preceding claims, characterized in that the hydraulically operable coupling (156, 168) comprises a rotatable input part (end 151), which is drivingly connected to the hydraulic motor (86') as well as to an axially displaceable piston (150), which is arranged coaxial to the input part (end 151).

10. Device according to one or more of the preceding claims, characterized in that the combine harvester comprises an inclined feed housing (24) with a cutter assembly platform (20) and a rear shaft (40) provided in the region of the inlet opening of the inclined feed housing pertains to the drive device, which shaft is drivingly connected to the hydraulic motor (86) by a belt drive (auxiliary drive device 80), which is arranged on the inclined feed housing (24).

11. Device according to one or more of the preceding claims, characterized in that the hydraulic motor is provided beneath the inclined feed housing (24) in the region of the inlet opening, the belt drive of the hydraulic motor (86) of the auxiliary drive device (80) being connected directly to the input of the rear shaft (40) for the drive of the inclined conveyer.

**Revendications**

1. Dispositif de commande auxiliaire, pour l'entraînement, en particulier pour l'entraînement en marche arrière d'organes de travail d'une moissonneuse-batteuse (10), par exemple d'un transporteur élévateur (25), indépendamment de la commande principale, avec un moteur hydraulique (86, 86') qui comporte un élément d'entraînement rotatif (104) qui peut être relié sélectivement par l'intermédiaire d'un accouplement embrayable à des éléments de transmission pour l'entraînement des organes de travail de la moissonneuse-batteuse, caractérisé en ce qu'il est rattaché à l'élément d'entraînement rotatif (104) un embrayage manœuvrable hydrauliquement qui peut réagir pour une pression, un peu inférieure à la pression de réaction pour l'entraînement du moteur hydraulique (86, 86'), de façon que le moteur hydraulique (86, 86'), ainsi que l'embrayage manœuvrable hydrauliquement soient raccordés en parallèle, par des conduites hydrauliques (92, 92'), à une pompe d'alimentation (174) à laquelle est rattachée une soupape de commutation (184) normalement fermée qui est intégrée par l'intermédiaire d'un circuit de commutation hydroélectrique (46, 176-182) et peut être manœuvrée par l'intermédiaire de moyens de réglage de telle façon que l'embrayage manœuvrable hydrauliquement et le moteur hydraulique (86) peuvent recevoir en même temps du fluide sous pression, l'augmentation de pression dans l'accouplement atteignant la pression de commutation nécessaire pour réaliser la liaison cinématique entre le moteur hydraulique (86, 86') et les organes de travail, avant que la pression de réaction pour l'entraînement du moteur hydraulique se soit établie.

2. Dispositif suivant la revendication 1, caractérisé en ce que le moteur hydraulique (86, 86') entraîne les composants d'entraînement de la moissonneuse-batteuse (10), en particulier les composants de travail de l'ensemble de récolte (18) et du carter de transporteur incliné (24) de la moissonneuse-batteuse, en sens opposé au sens de fonctionnement normal.

3. Dispositif suivant la revendication 1 ou 2, caractérisé en ce que le circuit hydro-électrique (46, 176-182) comporte un interrupteur basculant double (178) qui peut être manœuvré sélectivement ou alternativement et ne relie le moteur hydraulique (86, 86') à la source d'énergie (176) que lorsque l'alimentation électrique pour l'entraînement du transporteur élévateur (25) pour la commande en marche avant est interrompue.

4. Dispositif suivant une ou plusieurs des revendications précédentes, caractérisé en ce que l'on prévoit dans la liaison cinématique entre la source d'énergie (176) et le transporteur élévateur (25) un dispositif d'accouplement (108, 110, 146, 146') manœuvrable électriquement, la liaison cinématique pouvant être coupée de l'alimentation en énergie par l'intermédiaire de l'interrupteur basculant double (178), qui peut éventuellement réaliser l'alimentation en énergie pour le moteur hydraulique (86, 86') pour la marche arrière.

5. Dispositif suivant une ou plusieurs des revendications précédentes, caractérisé en ce que le dispositif d'accouplement (108, 110) manœuvrable hydrauliquement comporte des éléments d'entrée et de sortie coaxiaux qui sont reliés à l'élément de sortie (100) du moteur hydraulique (86) et à l'élément d'entrée (élément d'entraînement 104) du transporteur élévateur, l'élément d'entrée du dispositif d'accouplement (108, 110) étant coaxial à l'élément de sortie (100) du moteur hydraulique (86).

6. Dispositif suivant une ou plusieurs des revendications précédentes, caractérisé en ce qu'un dispositif de limitation de couples est prévu dans le système d'entraînement du transporteur élévateur (25).

7. Dispositif suivant la revendication 6, caractérisé en ce que le dispositif de limitation de couple est réalisé sous la forme d'un accouplement à glissement (64) entre la transmission à éléments de traction (54) et un arbre (60) pour l'entraînement du transporteur élévateur (25).

8. Dispositif suivant une ou plusieurs des revendications précédentes, caractérisé en ce que l'embrayage manœuvrable hydrauliquement (108, 110 ou 156, 168) est alimenté en fluide sous pression au moyen d'un ressort (112, 152), de sorte que la liaison cinématique entre le moteur hydraulique (86) et le transporteur élévateur est normalement interrompue, la chute de pression du fluide sous pression allant au-dessous de la pression de réaction pour l'actionnement de l'embrayage et permettant ainsi le désengagement de l'embrayage.

9. Dispositif suivant une ou plusieurs des revendications précédentes, caractérisé en ce que l'embrayage manœuvrable hydrauliquement (156, 168) comporte un élément d'entrée rotatif (extrémité 151) qui est relié cinématiquement au moteur hydraulique (86'), ainsi qu'à un piston (150) mobile axialement, qui est disposé coaxialement à l'élément d'entrée (extrémité 151).

10. Dispositif suivant une ou plusieurs des revendications précédentes, caractérisé en ce que la moissonneuse-batteuse comprend un carter de transporteur incliné (24) avec une plate-forme de barre de coupe (20) et le dispositif de commande comprend un arbre arrière (40) prévu dans la zone de l'ouverture d'entrée du carter de transporteur incliné, qui est relié cinématiquement par une transmission à éléments de traction (dispositif de commande auxiliaire 80) au moteur hydraulique (86) qui est placé sur le carter de transporteur incliné (24).

11. Dispositif suivant une ou plusieurs des revendications précédentes, caractérisé en ce que le moteur hydraulique est prévu au-dessous du carter de transporteur incliné (24) dans la zone de l'ouverture d'entrée, la transmission à éléments de traction du moteur hydraulique (86) du dispositif de commande auxiliaire (80) étant relié directement à l'entrée de l'arbre arrière (40) pour l'entraînement du transporteur incliné.

FIG. 1

FIG. 8

FIG. 2

FIG. 7

**FIG. 3**

FIG. 4

# FIG. 5

FIG. 6